# EUROPÄISCHE PATENTSCHRIFT

(11) **EP 1 020 743 B1**
(45) Veröffentlichungstag und Bekanntmachung des Hinweises auf die Patenterteilung: **07.12.2005**
(21) Anmeldenummer: 00100491.0
(22) Anmeldetag: 11.01.2000
(51) Int. Cl.: G02B 6/38

(54) **Steckverbindersystem für optische Kabel**
Connection system for optical cable
Système de connection pour cable optique

(30) Priorität: 15.01.1999 DE 19901473
(43) Veröffentlichungstag der Anmeldung: 19.07.2000
(73) Patentinhaber: Delphi Technologies, Inc., Troy, MI 48007-5052 (US)
(72) Erfinder: Halbach, Paul Gerhard J., 42369 Wuppertal (DE); Sikora, Andreas, 58099 Hagen (DE); Wisniewski, Reinhold, 42857 Remscheid (DE)
(74) Vertreter: Manitz, Finsterwald & Partner GbR

(56) Entgegenhaltungen:
- DE-A- 4 115 462

## Beschreibung

Die Erfindung betrifft ein Steckverbindersystem für optische Kabel mit wenigstens einem Drehverschluß, über den die Gehäuse zweier als Einsteckteil bzw. Aufnahmeteil ausgebildeter Verbinderteile miteinander koppelbar sind, wobei der Drehverschluß an einem der beiden Verbinderteile vorgesehen ist und mit wenigstens einer Verriegelungsfläche des anderen Verbinderteils zusammenwirkt, und wobei das jeweilige Einsteckteil mit wenigstens einem in das jeweilige Aufnahmeteil einzusteckenden insbesondere zwingenartigen optischen Verbindungselement versehen ist, dessen axiale Einsteckbewegung durch einen bezüglich des Aufnahmeteils festgelegten Endanschlag begrenzt ist.

Es sind bereits Steckverbindersysteme der eingangs genannten Art bekannt, bei denen mit einer jeweiligen Betätigung des Drehverschlusses in Schließrichtung die Gehäuse der miteinander zu koppelnden Verbinderteile in Axialrichtung zusammengezogen werden, wodurch das bezüglich dieser Gehäuse vorhandene axiale Spiel entsprechend verringert wird. Ein Ausgleich eines sich bezüglich der inneren optischen Elemente ergebenden Spiels wird hierbei nicht erreicht. Zu diesen inneren optischen Elementen zählen vor allem auch die an den betreffenden Kabelenden angebrachten, in der Regel zwingenartigen optischen Verbindungselemente. Diese waren bisher allenfalls federbelastet. Die übliche Federbelastung der optischen Verbindungselemente bringt nun aber den Nachteil mit sich, daß sich die Position der Verbindungselemente beispielsweise durch Erschütterungen oder eine Zugbelastung der optischen Kabel ändern kann. So genügt unter Umständen bereits eine schwache Zugbelastung der optischen Kabel für das Auftreten eines unerwünschten Spaltes zwischen den anzuschließenden optischen Kabeln und in den in bestimmten Fällen verwendeten elektrooptischen Modulen oder zwischen miteinander zu verbindenden optischen Kabeln. Das Ergebnis ist ein unerwünschter Lichtverlust, durch den die jeweilige optische Funktion entsprechend beeinträchtigt wird.

Bei einer aus der DE-A-41 15 462 bekannten Kupplungseinrichtung für Lichtleitkabel werden zwei gleich ausgeführte, jeweils ein Lichtleiterende aufnehmende Steckerteile über ein dazwischen angeordnetes Kupplungsgehäuse miteinander gekoppelt. Dazu ist zwischen jedem der beiden Steckerteile und dem Kupplungsgehäuse jeweils ein Bajonettverschluss vorgesehen. Ein jeweiliges Lichtleiterende ist in das betreffende Steckerteil bis zu einem diesem Steckerteil zugeordneten, mit dem Rand des Leitermantels zusammenwirkenden Endanschlag eingeschoben.

Ziel der Erfindung ist es, ein insbesondere auch gegenüber stärkeren Erschütterungen unempfindliches Steckverbindersystem der eingangs genannten Art zu schaffen, das bei einfachem Aufbau und problemloser Handhabung einen zuverlässigen Ausgleich eines sich bezüglich der inneren optischen Elemente ergebenden Spiels sowie die Aufrechterhaltung einer genau definierten Endposition der optischen Verbindungselemente gewährleistet.

Diese Aufgabe wird nach der Erfindung dadurch gelöst, daß der Drehverschluß überdies mit einer Bajonettverriegelung versehen ist, über die mit einer jeweiligen Betätigung des Drehverschlusses in Schließrichtung ein das optische Verbindungselement beaufschlagendes Anpreß- und/oder Positionierelement relativ zu dem Gehäuse des den Drehverschluß aufweisenden Verbinderteils axial verschiebbar ist, um das optische Verbindungselement zu dem Endanschlag hin entsprechend zu belasten.

Aufgrund dieser Ausbildung wird ein sich hinsichtlich der optischen inneren Elemente auf der Seite des Einsteckteils ergebendes Spiel ausgeglichen. Dies wird durch den gleichzeitig der Kopplung der Gehäuse der bei-den Verbinderteile dienenden Drehverschluß erreicht. Bei der Verwendung eines Drehverschlusses, durch den die Gehäuse der beiden Verbinderteile axial zusammengezogen werden, wird ein jeweiliges optisches Verbindungselement nicht nur durch dieses Zusammenziehen der Gehäuse axial verlagert bzw. belastet. Infolge der Bajonettverriegelung wird dieses optische Verbindungselement zusätzlich axial zum Endanschlag hin belastet. Mit einer jeweiligen Betätigung des Drehverschlusses in Schließrichtung wird ein jeweiliges optisches Verbindungselement somit doppelt axial beaufschlagt. Durch die Bajonettverriegelung ist überdies sichergestellt, daß ein jeweiliges optisches Verbindungselement stets seine Endlage beibehält. Das Steckverbindersystem ist somit auch gegenüber stärkeren Erschütterungen unempfindlich. Das Entstehen eines unzulässig großen Spaltes zwischen den miteinander zu verbindenden inneren Komponenten ist auch bei höheren Zugbelastungen der optischen Kabel ausgeschlossen. Für den Ausgleich eines sich bezüglich des Steckteils ergebenden Spiels sind keine zusätzlichen Mittel erforderlich. Dieser Ausgleich wird auf kostengünstige und zuverlässige Weise durch den Drehverschluß erreicht. Zudem ist eine zuverlässigere Abdichtung des Systems nach außen möglich. Die erfindungsgemäße Ausbildung schafft überdies die Möglichkeit der Verwendung einer standardisierten Verbinder-Technologie für optische Anwendungen. Es ist somit insbesondere eine einfachere Herstellung zum Beispiel durch Formen und Montage möglich. Die Handhabung des Systems ist äußerst einfach.

Bei einer zweckmäßigen Ausführung ist der an einem der beiden Verbinderteile vorgesehene Drehverschluß mit einer Betätigung in Schließrichtung bezüglich des anderen, die Verriegelungsfläche aufweisenden Verbinderteils entlang einer Schraubenlinie bewegbar. Dabei kann beispielsweise ein um 90° drehbarer Drehverschluß vorgesehen sein. Entsprechend werden durch den Drehverschluß auch die Gehäuse der beiden Verbinderteile axial zusammengezogen. In der Regel wird bereits damit auch das jeweilige optische Verbindungselement entsprechend axial beaufschlagt. Mit der überdies vorgesehenen Bajonettverriegelung ergibt sich dann die gewünschte doppelte axiale Beaufschlagung des jeweiligen optischen Verbindungselements.

Der mit der Bajonettverriegelung versehene Drehverschluß kann beispielsweise an einem Einsteckteil vorgesehen sein.

Bei einer bevorzugten praktischen Ausführungsform des erfindungsgemäßen Steckverbindersystems ist das optische Verbindungselement über eine dem betreffenden optischen Kabel zugeordnete Dichtung durch das Anpreß- bzw. Positionierelement beaufschlagbar. Dabei ist vorzugsweise eine kompressibie Kabeldichtung vorgesehen. Zweckmäßigerweise wird eine auf das betreffende optische Kabel aufgeschobene, zwischen dem optischen Verbindungselement und dem Anpreß- bzw. Positionierelement angeordnete ringförmige Dichtung verwendet.

Mit einer jeweiligen Betätigung des Drehverschlusses wird über die zusätzlich vorgesehene Bajonettverriegelung somit die Kabeldichtung entsprechend komprimiert, wodurch nicht nur ein Ausgleich eines sich bezüglich der inneren optischen Elemente ergebenden Spiels sowie die Aufrechterhaltung einer definierten Endposition eines jeweiligen optischen Verbindungselements erreicht, sondern gleichzeitig auch eine optimale Abdichtung erzielt wird. Der Drehverschluß dient somit insbesondere auch als mechanisches Hilfsmittel zum Komprimieren der Kabeldichtung, wobei er insgesamt eine äußerst einfache Handhabung sicherstellt. Mit der komprimierten Kabeldichtung wird das jeweilige optische Verbindungselement schließlich in Anlage an dem Endanschlag gehalten, und sie bringt im Ergebnis eine deutliche Verringerung des die optische Funktion betreffenden Spiels mit sich.

Liegt das über einen kompressible Kabeldichtung beaufschlagbare optische Verbindungselement bereits nach dem Zusammenstecken der beiden Verbinderteile am Endanschlag an, so wird mit einem anschließenden Betätigen des Drehverschlusses in Schließrichtung die Kabeldichtung komprimiert und das optische Verbindungselement in Anlage an dem Endanschlag gehalten. Auch bei stärkeren Erschütterungen ist ausgeschlossen, daß das optische Verbindungselement aus seiner Endlage herausbewegt wird. Die gewünschte Positionierung ist insbesondere auch bei stärkeren Zugbelastungen des betreffenden optischen Kabels noch gewährleistet.

Bei einer zweckmäßigen Ausführungsform ist das jeweilige Einsteckteil mit einer Erstverriegelung versehen, durch die das eingesetzte optische Verbindungselement an einem Herausfallen gehindert ist. Hierbei kann beispielsweise eine Rastverriegelung mit flexiblen Rastelementen vorgesehen sein.

Grundsätzlich kann auch das jeweilige Aufnahmeteil mit einer solchen Erstverriegelung versehen sein.

Zwischen den beiden über den Drehverschluß miteinander koppelbaren Verbinderteilen ist zweckmäßigerweise eine kompressible Gehäusedichtung vorgesehen. Mit einer jeweiligen Betätigung des Drehverschlusses in Schließrichtung wird dann gleichzeitig auch diese Gehäusedichtung komprimiert.

Eine solche Gehäusedichtung kann beispielsweise einen drei Dichtlippen aufweisenden, im Querschnitt allgemein E-förmigen Dichtring umfassen, wobei zur Abdichtung des Bereichs zwischen den beiden zusammengesteckten Verbinderteilen eine der Dichtlippen in Steckrichtung zwischen den Verbinderteilen eingeklemmt ist und die beiden anderen Dichtlippen innerhalb des Aufnahmeteils liegen.

Der Dichtring kann beispielsweise in einer Ringnut eines der beiden miteinander koppelbaren Verbinderteile angeordnet sein, die nach erfolgter Kopplung durch das andere Verbinderteil und die eingeklemmte Dichtlippe verschlossen ist. So kann der Dichtring beispielsweise in einer äußeren Ringnut des jeweiligen Einsteckteils angeordnet sein, die bei zusammengesteckten Verbinderteilen durch das Aufnahmeteil und die zwischen diesem und dem Einsteckteil eingeklemmte Dichtlippe verschlossen ist.

Bei einer zweckmäßigen praktischen Ausführungsform des erfindungsgemäßen Steckverbindersystems ist in das Aufnahmeteil wenigstens ein elektrooptisches Modul einsetzbar und das eingesetzte elektrooptische Modul mit wenigstens einem an dem Endanschlag anliegenden optischen Verbindungselement ausgerichtet.

Grundsätzlich kann das Aufnahmeteil beispielsweise auch ein der gegenseitigen Verbindung von optischen Kabeln dienendes In-line-Gehäuse umfassen, an dessen beiden Enden jeweils ein Einsteckteil einsteckbar ist.

Dabei können beide Einsteckteile jeweils über einen mit einer Bajonettverriegelung versehenen Drehverschluß mit dem In-line-Gehäuse koppelbar sein. Die beiden Drehverschlüsse können beispielsweise an den Einsteckteilen vorgesehen sein. Zumindest eines der beiden Einsteckteile kann beispielsweise durch das betreffende Anpaß- bzw. Positionierelement gebildet sein.

In den Unteransprüchen sind weitere vorteilhafte Ausführungsformen des erfindungsgemäßen Steckverbindersystems angegeben.

Die Erfindung wird im folgenden anhand von Ausführungsbeispielen unter Bezugnahme auf die Zeichnung näher erläutert; in dieser zeigen:
- Fig. 1: eine schematische, teilweise aufgeschnittene perspektivische Ansicht eines Steckverbindersystems, das ein Einsteckteil und ein Aufnahmeteil umfaßt, in das ein elektrooptisches Modul eingesetzt ist,
- Fig. 2: eine schematische auseinandergezogene Ansicht des Einsteckteils ohne die anzuschließenden optischen Kabel und ohne das Anpreß- bzw. Positionierelement,
- Fig. 3: eine schematische perspektivische Ansicht des vormontierten Einsteckteils vor dem Einsetzen der an den optischen Kabeln vorgesehenen optischen Verbindungselemente,
- Fig. 4: eine mit der Fig. 3 vergleichbare Ansicht des Einsteckteils, wobei der Drehverschluß in eine Position verbracht ist, in der die optischen Verbindungselemente eingesetzt werden können,
- Fig. 5: eine mit der Fig. 4 vergleichbare Ansicht des Einsteckteils unmittelbar vor dem Einsetzen der optischen Verbindungselemente,
- Fig. 6: eine mit der Fig. 5 vergleichbare Ansicht des Einsteckteils unmittelbar nach dem Einsetzen der optischen Verbindungselemente,
- Fig. 7: eine mit der Fig. 6 vergleichbare Ansicht des Einsteckteils unmittelbar vor dem Einsetzen des Anpreßbzw. Positionierelements,
- Fig. 8: eine mit der Fig. 7 vergleichbare vergrößerte Darstellung des Einsteckteils unmittelbar nach dem Einsetzen des Anpreß- bzw. Positionierelements,
- Fig. 9: eine schematische perspektivische Ansicht des in Fig. 8 dargestellten Einsteckteils von der Rückseite her,
- Fig. 10: eine schematische perspektivische Ansicht des in den Fig. 8 und 9 dargestellten Einsteckteils unmittelbar vor einem Überführen des Drehverschlusses in die Schließstellung,
- Fig. 11: eine teilweise aufgeschnittene perspektivische Ansicht des in den Fig. 8 bis 10 dargestellten Einsteckteils,
- Fig. 12: eine von der Seite des Aufnahmeteils ausgehende schematische perspektivische Ansicht des in Fig. 1 dargestellten Steckverbindersystems bei noch offenem Drehverschluß,
- Fig. 13: eine mit der Fig. 12 vergleichbare Ansicht des Steckverbindersystems bei geschlossenem Drehverschluß,
- Fig. 14: eine von der Seite des Einsteckteils ausgehende schematische perspektivische Ansicht des in Fig. 13 dargestellten Steckverbindersystems bei geschlossenem Drehverschluß,
- Fig. 15: eine schematische perspektivische Ansicht einer weiteren Ausführungsform eines Steckverbindersystems, bei dem das Aufnahmeteil ein In-line-Gehäuse umfaßt, an dessen beiden Enden jeweils ein Einsteckteil einsteckbar ist,
- Fig. 16: eine mit der Fig. 15 vergleichbare Ansicht des Steckverbindersystems ohne das vordere Einsteckteil,
- Fig. 17: eine schematische, teilweise aufgeschnittene Ansicht des in Fig. 15 dargestellten Steckverbindersystems und
- Fig. 18: eine mit der Fig. 17 vergleichbare Ansicht des Steckverbindersystems ohne das vordere Einsteckteil.

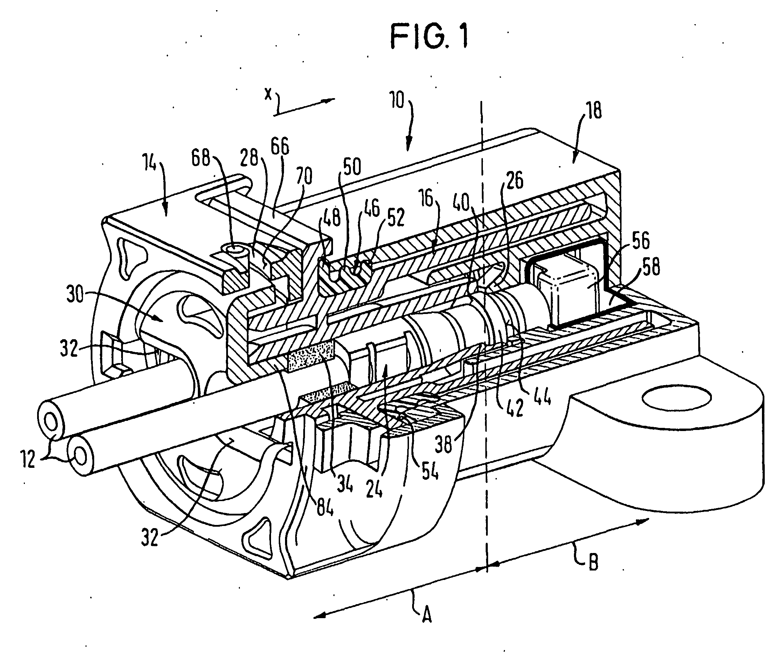

Die Fig. 1 und 12 bis 14 zeigen in schematischer Darstellung eine erste Ausführungsform eines Steckverbindersystems 10 für optische Kabel 12, wobei im vorliegenden Fall zwei solche optische Kabel 12 anschließbar sind.

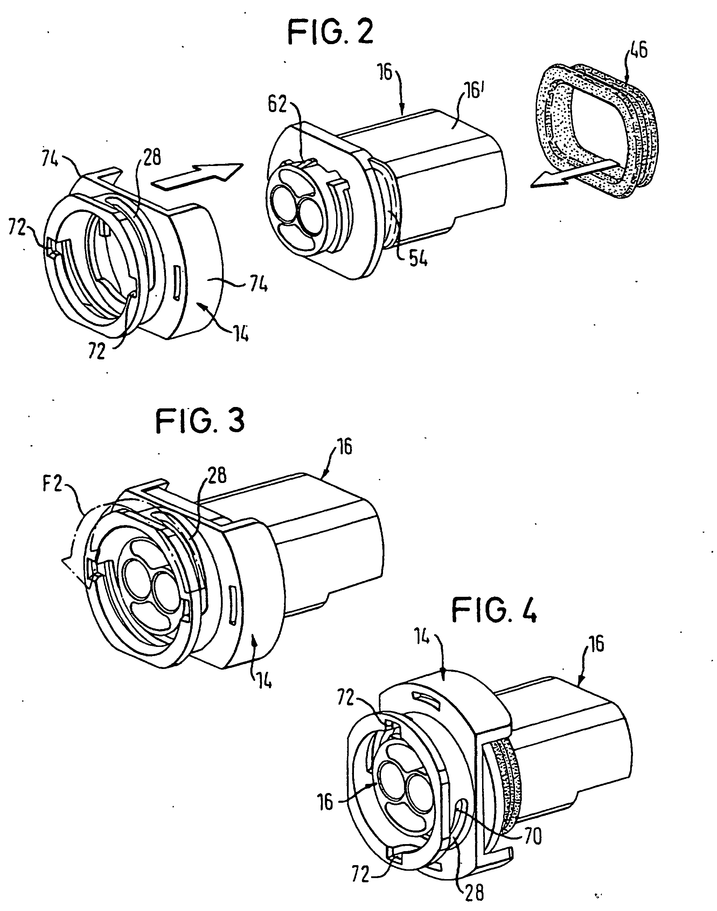

Das Steckverbindersystem 10 umfaßt einen Drehverschluß 14, über den die Gehäuse zweier als Einsteckteil 16 (vgl. insbesondere auch die Fig. 2 bis 11) bzw. Aufnahmeteil 18 ausgebildeter Verbinderteile miteinander koppelbar sind.

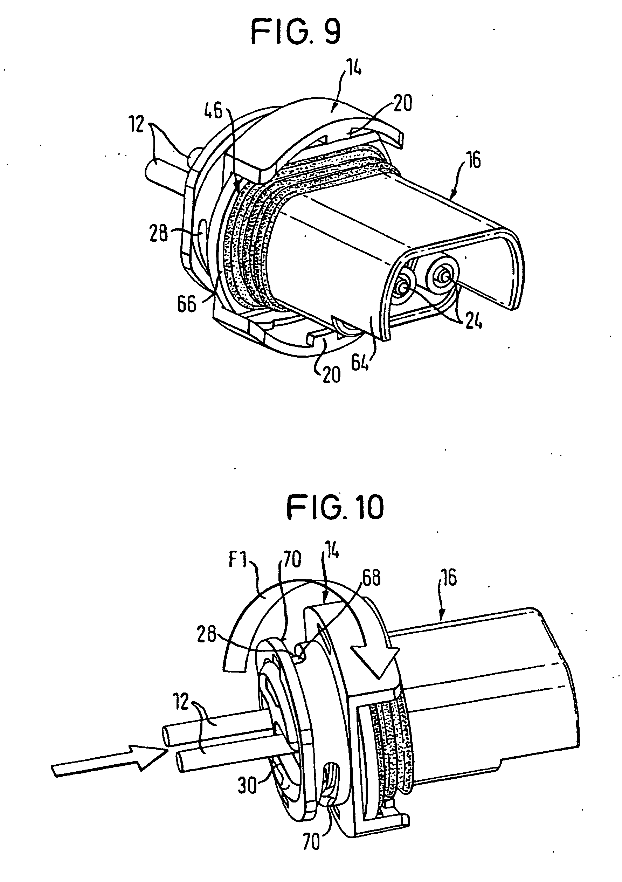

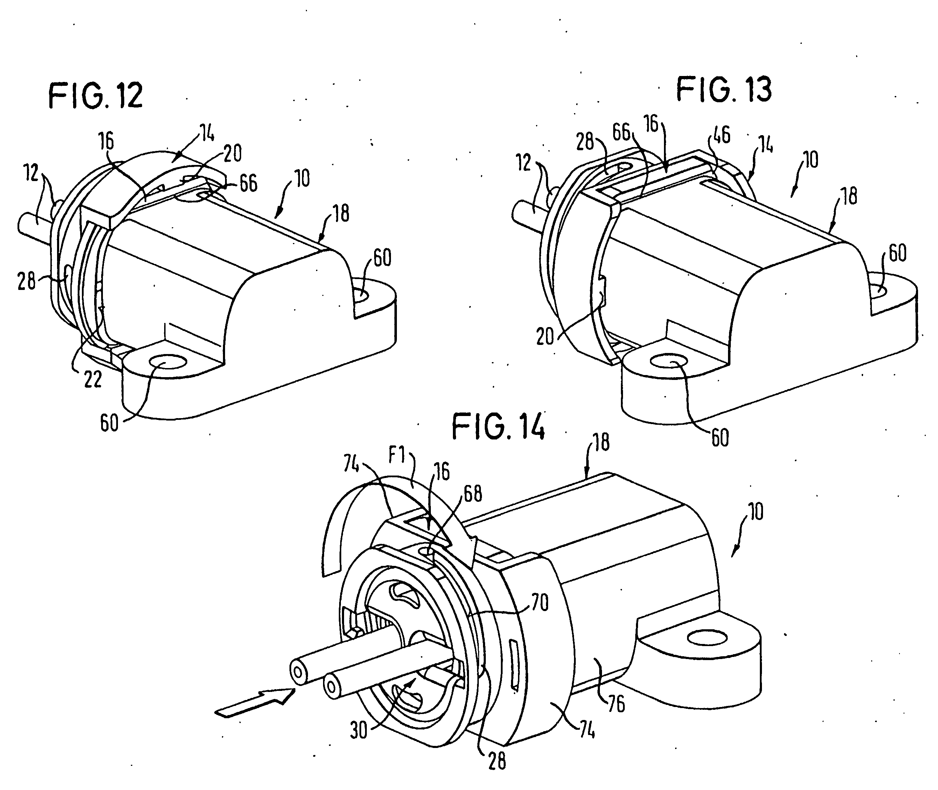

Der Drehverschluß 14 ist im vorliegenden Fall an dem Einsteckteil 16 vorgesehen. Er wirkt über zwei einander diametral gegenüberliegende, radial nach innen weisende Ansätze 20 mit einer Verriegelungsfläche 22 des Aufnahmeteils 18 zusammen (vgl. insbesondere die Fig. 9 und 11 bis 13). Dabei kann der an dem Einsteckteil 16 vorgesehene Drehverschluß 14 mit einer Betätigung in der in Fig. 10 durch den Pfeil F1 angedeuteten Schließrichtung bezüglich des die Verriegelungsfläche 22 (vgl. Fig. 12) aufweisenden Aufnahmeteils 18 entlang einer Schraubenlinie bewegbar sein, was durch einen entsprechenden Verlauf der Verriegelungsfläche 22 erreicht wird. Mit einer Betätigung des Drehverschlusses 14 werden die Gehäuse der beiden Verbinderteile 16, 18 somit axial zusammengezogen. Im vorliegenden Fall ist der Drehverschluß 14 mit einer Betätigung in Schließrichtung F1 über etwa ein Viertel einer Schraubenlinienwindung bewegbar, d.h. um etwa 90° drehbar.

In ein Grundteil 16' (vgl. auch insbesondere Fig. 2) des Einsteckteils 16 sind zwei an den betreffenden Enden der beiden optischen Kabel 12 angebrachte zwingenartige optische Verbindungselemente 24 einsetzbar, die dann über das Einsteckteil 16 in das Aufnahmeteil 18 eingesteckt werden. Die axiale Einsteckbewegung dieser optischen Verbindungselemente 24 ist durch wenigstens einen in dem Aufnahmeteil 18 vorgesehenen Endanschlag 26 begrenzt.

Der Drehverschluß 14 ist überdies mit einer Bajonettverriegelung 28 versehen, über die mit einer jeweiligen Betätigung des Drehverschlusses 14 in Schließrichtung F1 ein die optischen Verbindungselemente 24 beaufschlagendes Anpreß- und/oder Positionierelement 30 relativ zu dem Gehäuse des den Drehverschluß 14 aufweisenden Einsteckteils 16 axial verschiebbar ist, wodurch die optischen Verbindungselemente 24 zusätzlich zu dem Endanschlag 26 hin entsprechend belastet werden. Wie insbesondere anhand der Fig. 1, 8, 10 und 14 zu erkennen ist, ist das Anpreß- bzw. Positionierelement 31 durch die in zwei einander gegenüberliegenden Schlitzen 32 (vgl. Fig. 1) eingeklemmten optischen Kabel 12 daran gehindert, gedreht zu werden. Es wird somit zumindest im wesentlichen lediglich axial verschoben, was bei einer Betätigung des Drehverschlusses 14 durch die in diesem integrierte Bajonettverriegelung 28 bewirkt wird.

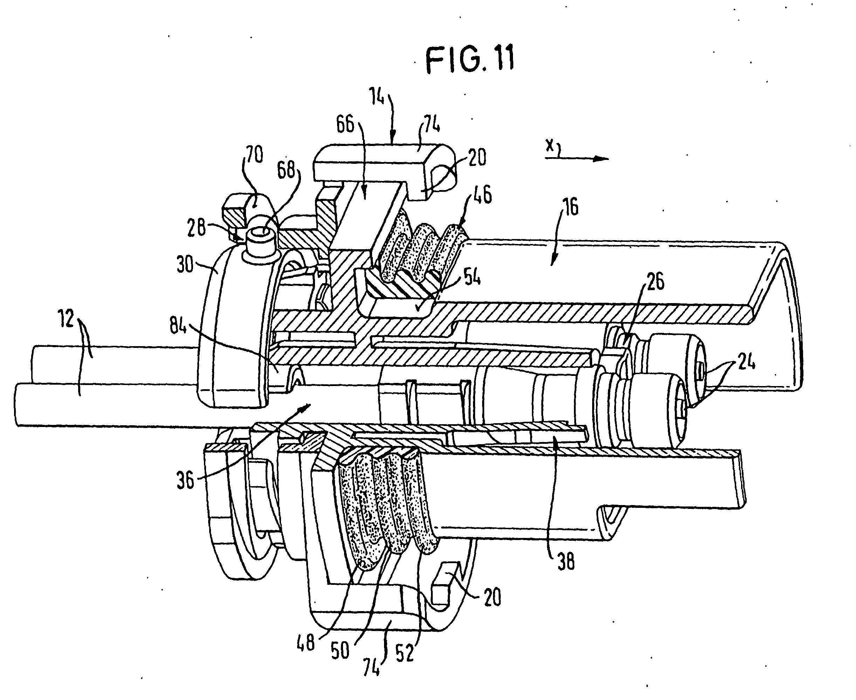

Wie am besten anhand der Fig. 1 zu erkennen ist, sind die optischen Verbindungselemente 24 jeweils über eine dem betreffenden optischen Kabel 12 zugeordnete Dichtung 34 durch das Anpreß- bzw. Positionierelement 30 beaufschlagbar. Im vorliegenden Fall ist jeweils eine kompressible ringförmige Kabeldichtung 34 vorgesehen, die in einem in der Fig. 11 mit 36 bezeichneten Bereich zwischen dem optischen Verbindungselement 24 und dem Anpreß- bzw. Positionierelement 30 auf das betreffende optische Kabel 12 aufgeschoben ist. In der Fig. 11 ist die betreffende Kabeldichtung der Übersichtlichkeit halber weggelassen.

Das Einsteckteil 16 ist mit einer Erstverriegelung 38 (vgl. insbesondere die Fig. 1 und 11) versehen, durch die die eingesetzten optischen Verbindungselemente 24 an einem Herausfallen gehindert sind. Diese Erstverriegelung 38 umfaßt im vorliegenden Fall einander gegenüberliegende, jeweils mit einer Ringschulter eines jeweiligen optischen Verbindungselements 24 zusammenwirkende Rastelemente. Wie am besten anhand der Fig. 1 zu erkennen ist, ist die Ringschulter 40 an einem am jeweiligen optischen Element 24 ausgebildeten Ring 42 vorgesehen, mit dessen vorderer Ringschulter 44 der ringförmige Endanschlag 26 des Aufnahmeteils 18 zusammenwirkt.

Die Anordnung kann insbesondere so getroffen sein, daß die über eine jeweilige kompressible Kabeldichtung 34 beaufschlagbaren optischen Verbindungselemente 24 bereits nach dem Zusammenstecken der beiden Verbinderteile 16, 18 am Endanschlag 26 anliegen und mit einem anschließenden Betätigen des Drehverschlusses 14 in Schließrichtung F1 die Kabeldichtungen 34 komprimiert und die optischen Verbindungselemente 24 in Anlage an den Endanschlag 26 gehalten werden.

Zwischen den beiden über dem Drehverschluß 14 miteinander koppelbaren Verbinderteilen 16, 18 ist eine durch einen im Querschnitt allgemein E-förmigen kompressiblen Dichtring 46 gebildete Gehäusedichtung vorgesehen, die mit einer Betätigung des Drehverschlusses 14 in Schließrichtung F1 komprimiert wird (vgl. insbesondere die Fig. 1, 2, 9 und 11). Der im Querschnitt allgemein E-förmige Dichtring 46 weist drei Dichtlippen 48, 50, 52 auf, wobei zur Abdeckung des Bereichs zwischen den beiden zusammengesteckten Verbinderteilen 16, 18 die eine größere radiale Abmessung besitzende Dichtlippe 48 in der mit der Axialrichtung x zusammenfallenden Steckrichtung zwischen den Verbinderteilen 16, 18 eingeklemmt ist und die beiden anderen Dichtlippen 50, 52 innerhalb des Aufnahmeteils 18 liegen. Die beiden Dichtlippen 50, 52 besitzen im vorliegenden Fall im Vergleich zu der Dichtlippe 48 kleinere gleiche radiale Abmessungen.

Der kompressible Dichtring 46 ist in einer äußeren Ringnut 54 des Einsteckteils 16 angeordnet, die bei zusammengesteckten Verbinderteilen 16, 18 durch das Aufnahmeteil 18 und die zwischen diesem und dem Einsteckteil 16 eingeklemmte Dichtlippe 48 verschlossen ist.

Beim vorliegenden Ausführungsbeispiel ist in das Aufnahmeteil 18 wenigstens ein elektrooptisches Modul 56 einsetzbar (vgl. insbesondere Fig. 1). Ein solches in das Aufnahmeteil 18 eingesetztes elektrooptisches Modul 56 ist schließlich mit wenigstens einem an dem Endanschlag 26 anliegenden optischen Verbindungselement 24 ausgerichtet. In einem jeweiligen elektrooptischen Modul 56 werden optische Signale in elektrische Signale und/oder elektrische Signale in optische Signale umgewandelt.

Das oder die elektrooptischen Module 56 können insbesondere in einer in das Aufnahmeteil 18 einsetzbaren Halterung 58 aus Metall aufgenommen sein, durch die gleichzeitig eine EMB-Abschirmung bewirkt wird. Das Gehäuse des elektronischen Moduls 56 kann gegenüber dem Aufnahmeteil 18 abgedichtet sein.

Wie insbesondere anhand der Fig. 12 und 13 zu erkennen ist, ist das Aufnahmeteil 18 mit Befestigungsöffnungen 60 versehen, über die das Steckverbindersystem 10 beispielsweise an einer Leiterplatte befestigbar ist.

Wie insbesondere anhand der Fig. 2 zu erkennen ist, ist an dem Einsteckteil 16 eine insbesondere durch Rastmittel gebildete Verriegelung 62 vorgesehen, durch die der axial aufschiebbare, mit der Bajonettverriegelung 28 versehene Drehverschluß 14 am Einsteckteil 16 gehalten wird.

Wie sich insbesondere aus der Fig. 9 ergibt, umfaßt das Einsteckteil 16 eine dem Schutz der optischen Verbindungselemente 24 dienende dreiseitige Abdeckung 64. Zudem ist dieses Einsteckteil 16 mit einer dem Schutz der Gehäusedichtung 46 dienenden Abdeckung 66 versehen (vgl. insbesondere auch die Fig. 1 und 11).

Das Anpreß- bzw. Positionierelement 30 weist zwei einander diametral gegenüberliegende radiale Ansätze 66 auf, die in entlang einer Schraubenlinie verlaufende Schlitze 70 der Bajonettverriegelung 28 eingreifen (vgl. insbesondere die Fig. 1, 7, 11 und 14), nachdem sie über einander diametral gegenüberliegende axiale Schlitze 72 (vgl. insbesondere die Fig. 4) der Bajonettverriegelung 28 eingeführt wurden.

Die mit der Verriegelungsfläche 22 des Aufnahmeteils 18 zusammenwirkenden radial nach innen gerichteten Ansätze 20 sind an zwei einander diametral gegenüberliegenden Abdeckbereichen 74 der dem Einsteckteil 16 zugeordneten Bajonettverriegelung 28 vorgesehen, durch die ein zusätzlicher Schutz für die Gehäusedichtung 46 erreicht wird (vgl. insbesondere die Fig. 2, 11 und 14).

Wie insbesondere anhand der Fig. 2 zu erkennen ist, wird zur Montage des Einsteckteils 16 zunächst die kompressible Gehäusedichtung 46 in die Ringnut 54 eingesetzt, die an dem in der Mitte der Fig. 2 dargestellten Grundteil 16' des Einsteckteils 16 ausgebildet ist. Dabei wird die Gehäusedichtung 46 von der Rückseite her aufgeschoben. Der die Bajonettverriegelung 28 aufweisende Drehverschluß 14 wird von der Vorderseite her auf das Grundteil 16' aufgesteckt. Dabei sorgt die Verriegelung 62 für eine Verrastung des Drehverschlusses 14 mit dem Grundteil 16'.

Wie sich anhand der Fig. 3 und 4 ergibt, wird der Drehverschluß 14 zunächst in Richtung des Pfeiles F2 um 90° nach links verdreht, um nach einem Einsetzen der an den betreffenden Enden der optischen Kabel 12 vorgesehenen zwingenartigen optischen Verbindungselemente auch das Anpreß- bzw. Positionierelement 30 einsetzen zu können.

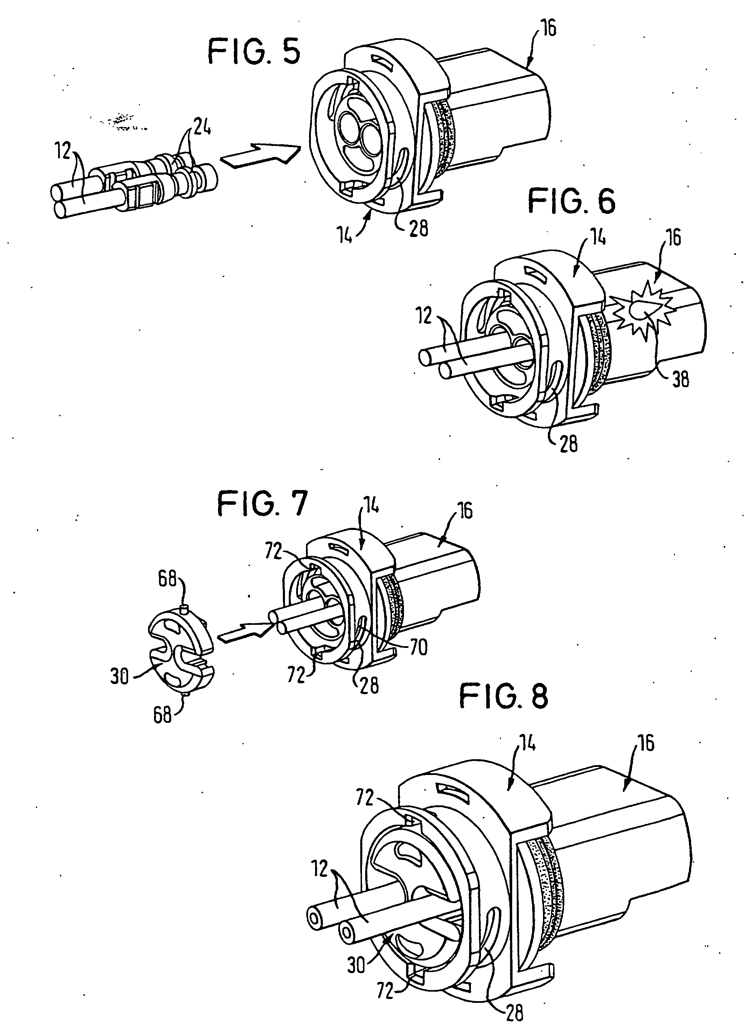

Fig. 5 zeigt das Einsteckteil 16 unmittelbar vor dem Einsetzen der optischen Verbindungselemente 24.

In der Darstellung der Fig. 6 sind die optischen Verbindungselemente 24 bereits in das Einsteckteil 16 eingesetzt und mit diesem verrastet. Die Verrastung erfolgt über die beispielsweise in den Fig. 1 und 11 erkennbare Erstverriegelung 38.

Die Fig. 7 zeigt das Einsteckteil 16 unmittelbar vor dem Einsetzen des Anpreß- bzw. Positionierelements 30. Zum Einsetzen dieses Anpreß- bzw. Positionierelements 30 ist es erforderlich, daß der Drehverschluß 14 in der beschriebenen Weise in Richtung des Pfeiles F2 (vgl. Fig. 3) um 90° nach links verdreht wurde. Erst dann sind die axialen Schlitze 72 mit den radialen Ansätzen 68 des Anpreß- bzw. Positionierelements 30 ausgerichtet.

Die Fig. 8 zeigt das Einsteckteil 16 unmittelbar nach dem Einsetzen des Anpreß- bzw. Positionierelements 30.

Nachdem das Anpreß- bzw. Positionierelement 30 auf diese Weise eingesetzt wurde, können die radialen Ansätze 68 dieses Anpreß- bzw. Positionierelements 30 in die jeweils entlang einer Schraubenlinie verlaufenden Schlitze 70 der Bajonettverriegelung 28 eintreten (vgl. Fig. 10). Anschließend kann der Drehverschluß 30 in Richtung des Pfeiles F1 um 90° nach rechts in die Schließstellung gedreht werden.

Zur Montage des Aufnahmeteils 18 werden zunächst das bzw. die elektrooptischen Module 56 in die aus Metall bestehende Halterung 58 eingebracht, in der diese beispielsweise durch Federelemente oder dergleichen fixiert werden können. Anschließend wird die Halterung 58 in das Aufnahmeteil 18 eingesetzt und beispielsweise mit einer Art Dummy-Verbindungselement oder einer Präzisionslehre fixiert. Mit einem solchen zusätzlichen Montagewerkzeug können dann die elektrooptischen Module 56 bezüglich der Aufnahmen für die zwingenartigen optischen Verbindungselemente ausgerichtet werden. Beispielsweise nach einem Verlöten kann ein solches Werkzeug dann wieder entfernt werden.

In der Regel werden die zwingenartigen optischen Verbindungselemente 24 bereits mit dem Einstecken des Einsteckteils 16 in das Aufnahmeteil 18 an den innerhalb des Aufnahmeteils 18 vorgesehenen Endanschlag 26 angelegt, d.h. bevor der Drehverschluß 14 in seine Schließstellung verbracht wurde. Wird der Drehschluß 14 nun in Richtung des Pfeiles F1 (vgl. insbesondere Fig. 10) in die Schließstellung bewegt, so ergibt sich eine doppelte axiale Beaufschlagung der zwingenartigen optischen Verbindungselemente durch das Anpreß- bzw. Positionierelement 30 über die Kabeldichtung 34. Das Anpreß- bzw. Positionierelement 30 wird einerseits durch das Zusammenwirken des Drehverschlusses 14 mit der Verriegelungsfläche 22 des Aufnahmeteils 18 (vgl. beispielsweise Fig. 12) und andererseits über die in dem Drehverschluß 14 integrierte zusätzliche Bajonettverriegelung 28 axial zum Endanschlag 26 hin verschoben. Im vorliegenden Fall wird der Drehverschluß 14 mit einer Betätigung in Schließrichtung F1 bezüglich des die Verriegelungsfläche 22 aufweisenden Verbinderteils 18 über etwa ein Viertel einer Schraubenlinienwindung bewegt, d.h. um etwa 90° gedreht. Angesichts der durch die Bajonettverriegelung 28 erzielten doppelten axialen Verlagerung des Anpreß- bzw. Positionierelements 30 wird die Kabeldichtung 34 entsprechend komprimiert. Die komprimierte Kabeldichtung 34 liefert eine Axialkraft, durch die die zwingenartigen optischen Verbindungselemente 24 gegen den Endanschlag 26 gepreßt und in Anlage an diesem Endanschlag 26 gehalten werden.

Damit wird ein bezüglich des Einsteckteils 16 auftretendes Spiel in dem in der Fig. 1 mit A bezeichneten Bereich beseitigt und eine festgelegte Position der zwingenartigen optischen Verbindungselemente 24 sichergestellt. Das die optische Funktion betreffende Spiel des Steckverbindersystems ist beschränkt auf ein mögliches Spiel zwischen der Lage der Endflächen der optischen Kabel 12 und dem bzw. den elektrooptischen Modulen 58 in dem in Fig. 1 mit B bezeichneten Bereich.

Mit einer Betätigung des Drehverschlusses 14 in Schließrichtung wird zudem die Dichtlippe 48 der im Querschnitt allgemein E-förmigen Gehäusedichtung 46 komprimiert, wodurch die Gehäuse der beiden Verbinderteile entsprechend nach außen abgedichtet werden.

Beim vorliegenden Ausführungsbeispiel kann das Anpreß- bzw. Positionierelement 30 über die Bajonettverriegelung 38 beispielsweise um einen Betrag von etwa 1 mm zusätzlich axial verschoben werden, um die für eine zusätzliche Abdichtung sorgenden Kabeldichtung 34 entsprechend zu komprimieren. Auch über die am Aufnahmeteil 18 vorgesehene Verriegelungsfläche 22 kann beispielsweise eine axiale Bewegung um etwa 1 mm erzielt werden. Bei einem solchen Ausführungsbeispiel würde sich somit eine axiale Gesamtverschiebung des Anpreß- bzw. Positionierelements 30 um etwa 2 mm ergeben.

In der Fig. 12 ist das Steckverbindersystem 10 bei noch offenem Drehverschluß 14 dargestellt.

Die Fig. 13 und 14 zeigen das Steckverbindersystem 10 bei geschlossenem Drehverschluß.

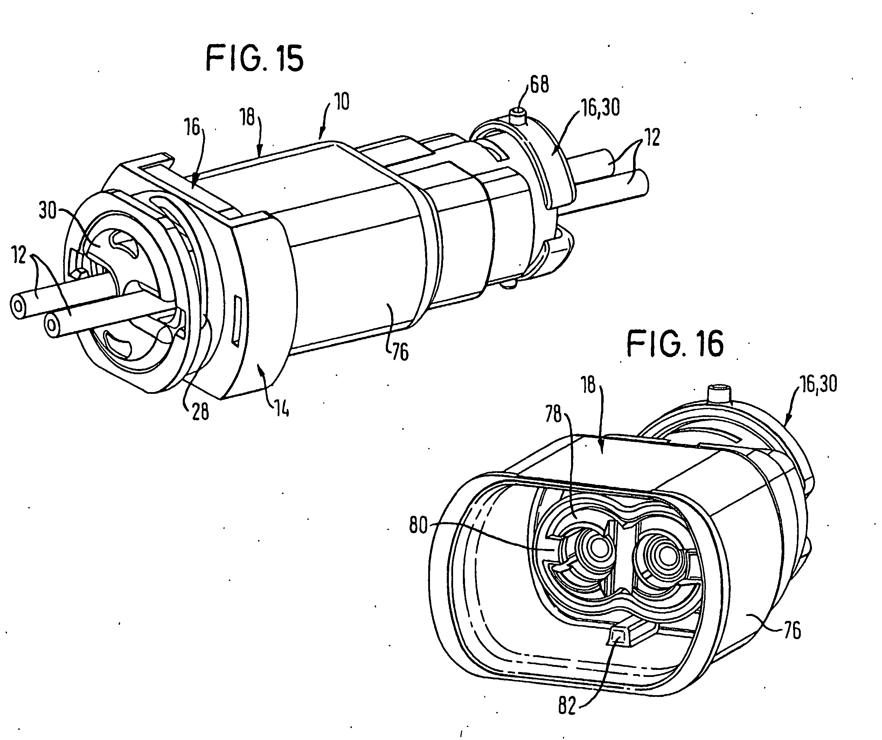

Die Fig. 15 bis 18 zeigen eine weitere Ausführungsform eines Steckverbindersystems 10. In diesem Fall umfaßt das Aufnahmeteil 18 ein der gegenseitigen Verbindung von optischen Kabeln 12 dienendes In-line-Gehäuse 76, an dessen beiden Enden jeweils ein Einsteckteil 16 einsteckbar ist. Im vorliegenden Fall sind beide Einsteckteile 16 jeweils über einen mit einer Bajonettverriegelung 28 versehenen Drehverschluß 14 mit dem Inline-Gehäuse 76 koppelbar.

Das in der Fig. 15 vordere Einsteckteil 16 besitzt den gleichen Aufbau wie das zuvor beschriebene Einsteckteil 16. Es ist somit sowohl für ein Inline-Gehäuse als auch für ein als Chip-Halter (Header) dienendes Aufnahmeteil verwendbar, in das ein oder mehrere elektrooptische Module einsetzbar sind.

Beim vorliegenden Ausführungsbeispiel ist das hintere Anpreß- bzw. Positionierelement 30 mit dem betreffenden Einsteckteil bzw. Verbinderteil 16 identisch.

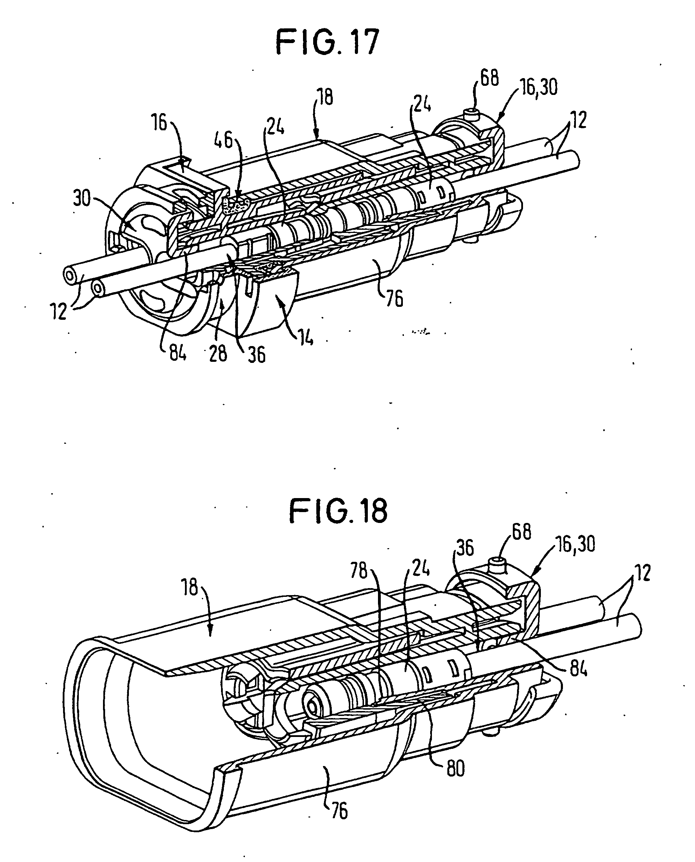

In der Fig. 17 ist auch wieder eine im Querschnitt allgemein E-förmige Gehäusedichtung 46 zu erkennen, die hier zwischen dem Gehäuse des vorderen Einsteckteils 16 und dem In-line-Gehäuse 76 angeordnet ist.

Das In-line-Gehäuse 76 ist im hinteren Bereich mit einer Erstverriegelung 78 versehen, durch die die von der hinteren Seite her eingesetzten zwingenartigen optischen Verbindungselemente 24 vor dem Betätigen des betreffenden Drehverschlusses 14 in Schließrichtung an einem Herausfallen gehindert sind.

Der im hinteren Bereich vorgesehene, hier der Übersichtlichkeit halber weggelassene Drehverschluß kann zumindest im wesentlichen den gleichen Aufbau wie der vordere Drehverschluß 14 besitzen, der dem anhand des vorangehenden Ausführungsbeispiels beschriebenen Drehverschluß entspricht. So kann insbesondere auch die im jeweiligen Drehverschluß 14 integrierte Bajonettverriegelung 28 zumindest im wesentlichen wieder so ausgebildet sein, wie dies zuvor beschrieben wurde.

Wie insbesondere anhand der Fig. 16 und 18 zu erkennen ist, kann die beispielsweise durch flexible Rastelemente gebildete Erstverriegelung 78 des In-line-Gehäuses 76 nach einem Einsetzen und Verrasten der hinteren zwingenartigen optischen Verbindungselemente 24 durch ein von der Vorderseite her in das In-line-Gehäuse 76 einsetzbares Blockierelement 80 daran gehindert werden, die optischen Verbindungselemente 24 wieder freizugeben. Dieses Blockierelement 18 ist insbesondere auch in der Fig. 16 erkennbar.

In dem Bereich 36 zwischen einem jeweiligen Anpreß- bzw. Positionierelement 30 und den betreffenden zwingenartigen optischen Verbindungselementen 24 (vgl. insbesondere die Fig. 17 und 18) ist auch im vorliegenden Fall jeweils wieder eine Kabeldichtung 46 (vgl. die Fig. 1 bis 14) vorgesehen, die hier der Übersichtlichkeit halber allerdings weggelassen ist.

Sowohl beim vorliegenden als auch beim vorangehenden Ausführungsbeispiel werden die Kabeldichtungen 34 jeweils über einen radial innenliegenden axialen Ansatz 84 des betreffenden Anpreß- bzw. Positionierelements 30 beaufschlagt (vgl. insbesondere die Fig. 17 und 18 sowie die Fig. 1). Auch im übrigen kann die vorliegende Ausführungsform zumindest im wesentlichen wieder den gleichen Aufbau wie die zuvor beschriebene Ausführungsform besitzen, so daß sich insbesondere hinsichtlich einer jeweiligen Betätigung der mit einer integrierten Bajonettverriegelung 28 versehenen Drehverschlüsse 14 wieder die gleiche Funktion ergibt.

### Bezugszeichenliste

- 10: Steckverbindersystem
- 12: optisches Kabel
- 14: Drehverschluß
- 16: Verbinderteil, Einsteckteil
- 16': Grundteil
- 18: Verbinderteil, Aufnahmeteil
- 20: radialer Ansatz
- 22: Verriegelungsfläche
- 24: zwingenartiges optisches Verbindungselement
- 26: Endanschlag
- 28: Bajonettverriegelung
- 30: Anpreß- und/oder Positionierelement
- 32: Schlitz
- 34: kompressible Kabeldichtung
- 36: Bereich für eine jeweilige Kabeldichtung
- 38: Erstverriegelung
- 40: Ringschulter
- 42: Ring
- 44: Ringschulter
- 46: kompressible Gehäusedichtung, Dichtring
- 48: Dichtlippe
- 50: Dichtlippe
- 52: Dichtlippe

- 54: Ringnut
- 56: elektrooptisches Modul
- 58: Halterung aus Metall
- 60: Befestigungsöffnung
- 62: Verriegelung
- 64: Abdeckung
- 66: Abdeckung
- 68: radialer Ansatz
- 70: Schlitz
- 72: Schlitz
- 74: Abdeckbereich
- 76: In-line-Gehäuse
- 78: Erstverriegelung
- 80: Blockierelement
- 82: Indexbereich
- 84: axialer Ansatz

- F1: Pfeil
- F2: Pfeil
- x: Axialrichtung, Steckrichtung

## Patentansprüche

1. Steckverbindersystem (10) für optische Kabel (12) mit wenigstens einem Drehverschluß (14), über den die Gehäuse zweier als Einsteckteil (16) bzw. Aufnahmeteil (18) ausgebildeter Verbinderteile miteinander koppelbar sind, wobei der Drehverschluß (14) an einem (16) der beiden Verbinderteile (16, 18) vorgesehen ist und mit wenigstens einer Verriegelungsfläche (22) des anderen Verbinderteils zusammenwirkt, und wobei das jeweilige Einsteckteil (16) mit wenigstens einem in das jeweilige Aufnahmeteil (18) einzusteckenden insbesondere zwingenartigen optischen Verbindungselement (24) versehen ist, dessen axiale Einsteckbewegung durch einen bezüglich des Aufnahmeteils (18) festgelegten Endanschlag (26) begrenzt ist,
wobei der Drehverschluß (14) überdies mit einer Bajonettverriegelung (28) versehen ist **dadurch gekennzeichnet daß** das Steckverbindersystem ein Anpreß- und/oder Positionierelement (30) aufweist, welches auf das optische Verbindungselement (24) beaufschlagt ist, und welches relativ zu dem Gehäuse des den Drehverschluß (14) aufweisende Verbinderteil (16) axial verschiebber ist, wobei diese axiale Verschibung über die Bajonettverriegelung (28) erfolgt, so daß bei einer jeweiligen Betätigung des Drehverschlusses (14) in Schließrichtung (F1) das Anpreß- und/oder Positionierelement (30) relativ zu dem Gehäuse des den Drehverschluß (14) aufweisenden Verbinderteils (16) axial verschoben wird über die jeweilige Betätigung des Drehverschlusses (14) in Schließrichtung (F1) das das optische Verbindungselement (24) beaufschlagende Anpreß- und/oder Positionierelement (30) relativ zu dem Gehäuse des den Drehverschluß (14) aufweisenden Verbinderteils (16) axial verschiebbar ist, um das optische Verbindungselement (24) zu dem Endanschlag (26) hin entsprechend zu belasten.

2. Steckverbindersystem nach Anspruch 1,
**dadurch gekennzeichnet,**
**daß** der an einem (16) der beiden Verbinderteile (16, 18) vorgesehene Drehverschluß (14) mit einer Betätigung in Schließrichtung (F1) bezüglich des anderen, die Verriegelungsfläche (22) aufweisenden Verbinderteils (18) entlang einer Schraubenlinie bewegbar ist.

3. Steckverbindersystem nach Anspruch 2,
**dadurch gekennzeichnet,**
**daß** der Drehverschluß (14) mit einer Betätigung in Schließrichtung (F1) bezüglich des die Verriegelungsfläche (22) aufweisenden Verbinderteils (18) über etwa ein Viertel einer Schraubenlinienwindung bewegbar ist.

4. Steckverbindersystem nach einem der vorhergehenden Ansprüche,
**dadurch gekennzeichnet,**
**daß** der mit der Bajonettverriegelung (28) versehene Drehverschluß (14) an einem Einsteckteil (16) vorgesehen ist.

5. Steckverbindersystem nach einem der vorhergehenden Ansprüche,
**dadurch gekennzeichnet,**
**daß** das optische Verbindungselement über eine dem betreffenden optischen Kabel (12) zugeordnete Dichtung (34) durch das Anpreß- bzw. Positionierelement (30) beaufschlagbar ist.

6. Steckverbindersystem nach Anspruch 5,
**dadurch gekennzeichnet,**
**daß** eine kompressible Kabeldichtung (34) vorgesehen ist.

7. Steckverbindersystem nach Anspruch 5 oder 6,
**dadurch gekennzeichnet,**
**daß** eine auf das betreffende optische Kabel (12) aufgeschobene, zwischen dem optischen Verbindungselement (24) und dem Anpreß- bzw. Positionierelement (30) angeordnete ringförmige Dichtung (34) vorgesehen ist.

8. Steckverbindersystem nach einem der vorhergehenden Ansprüche,
**dadurch gekennzeichnet,**
**daß** das über eine kompressible Kabeldichtung (34) beaufschlagbare optische Verbindungselement (24) bereits nach dem Zusammenstecken der beiden Verbinderteile (16, 18) am Endanschlag (26) anliegt und mit einem anschließenden Betätigen des Drehverschlusses (14) in Schließrichtung (F1) die Kabeldichtung (34) komprimiert und das optische Verbindungselement (24) in Anlage an dem Endanschlag (26) gehalten wird.

9. Steckverbindersystem nach einem der vorhergehenden Ansprüche,
**dadurch gekennzeichnet,**
**daß** das jeweilige Einsteckteil (16) mit einer Erstverriegelung (38) versehen ist, durch die das eingesetzte optische Verbindungselement (24) an einem Herausfallen gehindert ist.

10. Steckverbindersystem nach einem der vorhergehenden Ansprüche,
**dadurch gekennzeichnet,**
**daß** das jeweilige Aufnahmeteil (18) mit einer Erstverriegelung (78) versehen ist, durch die das eingesetzte optische Verbindungselement (24) an einem Herausfallen gehindert ist.

11. Steckverbindersystem nach einem der vorhergehenden Ansprüche,
**dadurch gekennzeichnet,**
**daß** zwischen den beiden über den Drehverschluß (14) miteinander koppelbaren Verbinderteilen (16, 18) eine kompressible Gehäusedichtung (46) vorgesehen ist, die mit einer Betätigung des Drehverschlusses (14) in Schließrichtung (F1) komprimiert wird.

12. Steckverbindersystem nach Anspruch 11,
**dadurch gekennzeichnet,**
**daß** die Gehäusedichtung einen drei Dichtlippen (48, 50, 52) aufweisenden, im Querschnitt allgemein E-förmigen Dichtring (46) umfaßt, wobei zur Abdichtung des Bereichs zwischen den beiden zusammengesteckten Verbinderteilen (16, 18) eine (48) der Dichtlippen in Steckrichtung (x) zwischen den Verbinderteilen eingeklemmt ist und die beiden anderen Dichtlippen (50, 52) innerhalb des Aufnahmeteils (18) liegen.

13. Steckverbindersystem nach Anspruch 12,
**dadurch gekennzeichnet,**
**daß** der Dichtring (46) in einer Ringnut (54) eines (16) der beiden miteinander koppelbaren Verbinderteile (16, 18) angeordnet ist, die nach erfolgter Kopplung durch das andere Verbinderteil (18) und die eingeklemmte Dichtlippe (48) verschlossen ist.

14. Steckverbindersystem nach Anspruch 13,
**dadurch gekennzeichnet,**
**daß** der Dichtring (46) in einer äußeren Ringnut (54) des jeweiligen Einsteckteils (16) angeordnet ist, die bei zusammengesteckten Verbinderteilen (16, 18) durch das Aufnahmeteil (18) und die zwischen diesem und dem Einsteckteil (16) eingeklemmte Dichtlippe (48) verschlossen ist.

15. Steckverbindersystem nach einem der vorhergehenden Ansprüche,
**dadurch gekennzeichnet,**
**daß** in das Aufnahmeteil (18) wenigstens ein elektrooptisches Modul (56) einsetzbar ist und das eingesetzte elektrooptische Modul (56) mit wenigstens einem an dem Endanschlag (26) anliegenden optischen Verbindungselement (24) ausgerichtet ist.

16. Steckverbindersystem nach einem der vorhergehenden Ansprüche,
**dadurch gekennzeichnet,**
**daß** das Aufnahmeteil (18) ein der gegenseitigen Verbindung von optischen Kabeln (12) dienendes In-line-Gehäuse (76) umfaßt, an dessen beiden Enden jeweils ein Einsteckteil (16) einsteckbar ist.

17. Steckverbindersystem nach Anspruch 16,
**dadurch gekennzeichnet,**
**daß** beide Einsteckteile (16) jeweils über einen mit einer Bajonettverriegelung (28) versehenen Drehverschluß (14) mit dem In-line-Gehäuse (76) koppelbar sind.

18. Steckverbindersystem nach Anspruch 16 oder 17,
**dadurch gekennzeichnet,**
**daß** die beiden Drehverschlüsse (14) an den beiden Einsteckteilen vorgesehen sind.

19. Steckverbindersystem nach einem der Ansprüche 16 bis 18,
**dadurch gekennzeichnet,**
**daß** eines der beiden Einsteckteile (16) durch das betreffende Anpaß bzw. Positionierelement (30) gebildet ist.

## Claims

1. Plug connector system (10) for optical cables (12) comprising at least one rotational lock (14) via which the housings of two connector parts respectively designed as a plug-in part (16) and a reception part (18) can be coupled to one another, with the rotational lock (14) being provided at one (16) of the two connector parts (16, 18) and cooperating with at least one locking surface (22) of the other connector part, and with the respective plug-in part (16) being provided with at least one optical connection element (24) which is to be plugged into the respective reception part (18), which is in particular ferrule-like and the axial plug-in movement of which is limited by an end abutment (26) fixed with respect to the reception part (18) and also comprising a pressing and/or positioning element (30) which acts on the optical connection element (24) and is axially displaceable relative to the housing of the connector part (16) having the rotational lock (14), wherein the rotational lock (14) is also provided with a bayonet lock (28) via which, with a respective actuation of the rotational lock (14) in the closing direction (F1), the pressing and/or positioning element (30) is axially displaceable in order to load the optical connection element (24) in the corresponding direction towards the end abutment (26).

2. Plug connector system in accordance with claim 1, **characterized in that**, with an actuation in the closing direction (F1), the rotational lock (14) provided at one (16) of the two connector parts (16, 18) can be moved along a helical line with respect to the other connector part (18) having the locking surface (22).

3. Plug connector system in accordance with claim 2, **characterized in that** the rotational lock (14) can be moved, with an actuation in the closing direction (F1,) with respect to the connector part (18) having the locking surface (22) over approximately one fourth of a helical turn.

4. Plug connector system in accordance with any one of the preceding claims, **characterized in that** the rotational lock (14) provided with the bayonet lock (28) is provided at a plug-in part (16).

5. Plug connector system in accordance with any one of the preceding claims, **characterized in that** the optical connection element can be acted on by the press-on and/or positioning element (30) via a seal (24) associated with the relevant optical cable (12).

6. Plug connector system in accordance with claim 5, **characterized in that** a compressible cable seal (34) is provided.

7. Plug connector system in accordance with claim 5 or claim 6, **characterized in that** a ring-shaped seal (34) is provided which is pushed onto the relevant optical cable (12) and is arranged between the optical connection element (24) and the press-on and/or positioning element (30).

8. Plug connector system in accordance with any one of the preceding claims, **characterized in that**, after the plugging together of the two connector parts (16, 18,) the optical connection element (24) which can be acted on via a compressible cable seal (34) is already in contact at the end abutment (26); and **in that**, with a subsequent actuation of the rotational lock (14) in the closing direction (F1), the cable seal (34) is compressed and the optical connection element (24) is held in contact at the end abutment (26).

9. Plug connector system in accordance with any one of the preceding claims, **characterized in that** the respective plug-in part (16) is provided with a first locking arrangement (38) by which the inserted optical connection element (24) is prevented from falling out.

10. Plug connector system in accordance with any one of the preceding claims, **characterized in that** the respective reception part (18) is provided with a first locking arrangement (78) by which the inserted optical connection element (24) is prevented from falling out.

11. Plug connector system in accordance with any one of the preceding claims, **characterized in that** a compressible housing seal (46) is provided between the two connector parts (16, 18) which can be coupled to one another via the rotational lock (14) and is compressed with an actuation of the rotational lock (14) in the closing direction (F1).

12. Plug connector system in accordance with claim 11, **characterized in that** the housing seal comprises a sealing ring (46) having three sealing lips (48, 50, 52) and generally being E-shaped in cross-section, with one (48) of the sealing lips being clamped between the connector parts in the plugging direction (x) and the other two sealing lips (50, 52) lying inside the reception part (18) for the sealing of the region between the two plugged together connector parts (16, 18).

13. Plug connector system in accordance with claim 12, **characterized in that** the sealing ring (46) is arranged in a ring groove (54) of one (16) of the two connector parts (16, 18) which can be coupled to one another, said ring groove being closed after the completion of the coupling by the other connector part (18) and the clamped sealing lip (48).

14. Plug connector system in accordance with claim 13, **characterized in that** the sealing ring (46) is arranged in an outer ring groove (54) of the respective plug-in part (16), said ring groove being closed by the reception part (18) and the sealing lip (48) being clamped between the latter and the plug-in part (16) when the connector parts (16, 18) are plugged together.

15. Plug connector system in accordance with any one of the preceding claims, **characterized in that** at least one electro-optical module (56) can be inserted into the reception part (18); and **in that** the inserted electro-optical module (56) is aligned with at least one optical connection element (24) contacting the end abutment (26).

16. Plug connector system in accordance with any one of the preceding claims, **characterized in that** the reception part (18) comprises an inline housing (76) serving for the mutual connection of optical cables (12) and at the two ends of which a respective plug-in part (16) can be plugged in.

17. Plug connector system in accordance with claim 16, **characterized in that** both plug-in parts (16) can each be coupled to the inline housing (76) via a rotational lock (14) provided with a bayonet lock (28).

18. Plug connector system in accordance with claim 16 or claim 17, **characterized in that** the two rotational locks (14) are provided at the two plug-in parts.

19. Plug connector system in accordance with any one of the claims 16 to 18, **characterized in that** one of the two plug-in parts (16) is formed by the relevant press-on and/or positioning element (30).

## Revendications

1. Système de connexion par enfichage (10) pour des câbles optiques (12), avec au moins un mécanisme de verrouillage par rotation (14), par l'intermédiaire duquel les boitiers de deux parties de connexion, réalisées sous la forme de parties d'enfichage mâles (16) ou de parties d'enfichage femelles (18), sont susceptibles d'être couplés ensemble, le mécanisme de verrouillage par rotation (14) étant prévu sur l'une (16) des deux parties de connexion (16, 18) et coopérant avec au moins une surface de verrouillage (22) de l'autre partie de connexion, et où la partie d'enfichage mâle (16) respective est munie d'au moins un élément de liaison (24) optique, en particulier du genre d'un serre-joint, à enficher dans la partie d'enfichage femelle (18) respective, élément de liaison dont le déplacement d'enfichage axial est limité par une butée de fin de course (26) fixée par rapport à la partie d'enfichage femelle (18), ainsi qu'avec un élément de pressage et/ou de positionnement (30), sollicitant l'élément de connexion (24) optique et déplaçable axialement par rapport au boîtier de la partie de connexion (16) présentant le mécanisme de verrouillage par rotation (14), le mécanisme de verrouillage par rotation (14), en plus de cela, étant muni d'un verrouillage à baïonnette (28), par l'intermédiaire duquel, par un actionnement respectif du mécanisme de verrouillage par rotation (14) dans le sens de fermeture (F1), l'élément de pressage et/ou de positionnement (30) est déplaçable axialement, pour solliciter de manière correspondante l'élément de liaison (24) optique par rapport à la butée de fin de course (26).

2. Système de connexion par enfichage selon la revendication 1, **caractérisé en ce que** le mécanisme de verrouillage par rotation (14), prévu sur l'une (16) des deux parties de connexion (16, 18), est déplaçable le long d'une ligne hélicoïdale, par un actionnement dans le sens de fermeture (F1) par rapport à l'autre partie de connexion (18) présentant la surface de verrouillage (22).

3. Système de connexion par enfichage selon la revendication 2, **caractérisé en ce que** le mécanisme de verrouillage par rotation (14) est déplaçable sur à peu près un quart d'un tour de la ligne hélicoïdale, par un actionnement dans le sens de fermeture (F1) par rapport à la partie de connexion (18) présentant la surface de verrouillage (22).

4. Système de connexion par enfichage selon l'une des revendications précédentes, **caractérisé en ce que** le mécanisme de verrouillage par rotation (14), muni du verrouillage à baïonnette (28), est prévu sur une partie d'enfichage mâle (16).

5. Système de connexion par enfichage selon l'une des revendications précédentes, **caractérisé en ce que** l'élément de connexion optique est susceptible être sollicité, au moyen de l'élément de pressage et/ou de positionnement (30), par l'intermédiaire d'un joint d'étanchéité (34) associé au câble optique (12) concerné.

6. Système de connexion par enfichage selon la revendication 5, **caractérisé en ce qu'**est prévu un joint d'étanchéité pour câble (34) compressible.

7. Système de connexion par enfichage selon la revendication 5 ou 6, **caractérisé en ce qu'**un joint d'étanchéité (34) à forme annulaire, enfilé sur le câble optique (12) concerné, disposé entre l'élément de connexion (24) optique et l'élément de pressage et/ou de positionnement (30), est prévu.

8. Système de connexion par enfichage selon l'une des revendications précédentes, **caractérisé en ce que** l'élément de verrouillage (24) optique, susceptible être sollicité par l'intermédiaire d'un joint d'étanchéité pour câble (34) compressible, déjà après l'assemblage par enfichage des deux parties de connexion (16, 18) est en appui sur la butée de fin de course (26) et, par un actionnement subséquent du mécanisme de verrouillage par rotation (14), dans le sens de fermeture (F1), comprime le joint d'étanchéité pour câble (34) et maintient l'élément de connexion (24) optique en appui sur la butée de fin de course (26).

9. Système de connexion par enfichage selon l'une des revendications précédentes, **caractérisé en ce que** l'élément d'enfichage mâle respectif est muni d'un premier verrouillage (38), au moyen duquel l'élément de connexion (24) optique ayant été inséré est empêché de s'échapper.

10. Système de connexion par enfichage selon l'une des revendications précédentes, **caractérisé en ce que** l'élément d'enfichage femelle (18) respectif est muni d'un premier verrouillage (78), au moyen duquel l'élément de connexion (24) optique inséré est empêché de s'échapper.

11. Système de connexion par enfichage selon l'une des revendications précédentes, **caractérisé en ce que**, entre les deux parties de connexion (16, 18), susceptibles d'être accouplées ensemble par l'intermédiaire du mécanisme de verrouillage par rotation (14), est prévu un joint d'étanchéité pour boîtier (46) compressible, comprimé par un actionnement du mécanisme de verrouillage par rotation (14) dans le sens de fermeture (F1).

12. Système de connexion par enfichage selon la revendication 11, **caractérisé en ce que** le joint d'étanchéité pour boîtier comprend une bague d'étanchéité (46) à section transversale globalement en forme de E, présentant trois lèvres d'étanchéité (48, 50, 52), sachant que, pour obtenir l'isolation étanche de la zone située entre les deux parties de connexion (16, 18) assemblées par enfichage, est enserrée, entre les parties de connexion, dans le sens d'enfichage (x), l'une (48) des lèvres d'étanchéité, et les deux autres lèvres d'étanchéité 50, 52) sont situées à l'intérieur de la partie d'enfichage femelle (18).

13. Système de connexion par enfichage selon la revendication 12, **caractérisé en ce que** la bague d'étanchéité (46) est disposée dans une gorge annulaire (54) d'une (16) des deux parties de connexion (16, 18) susceptibles être accouplées ensemble, qui, une fois que le couplage a été effectué, est fermée par l'autre partie de connexion (18) et la lèvre d'étanchéité (48) enserrée.

14. Système de connexion par enfichage selon la revendication 13, **caractérisé en ce que** la bague d'étanchéité (46) est disposée dans une gorge annulaire (54) extérieure de la partie d'enfichage mâle respective, qui, lorsque les deux parties de connexion (16, 18) sont assemblées par enfichage, est fermée au moyen de la partie d'enfichage femelle (18) et de la lèvre d'étanchéité (48), enserrée entre celle-ci et la partie d'enfichage mâle (16).

15. Système de connexion par enfichage selon l'une des revendications précédentes, **caractérisé en ce que**, dans la partie d'enfichage femelle (18), est susceptible être inséré au moins un module électro-optique (56), et le module électro-optique (56) inséré est orienté, à l'aide d'au moins un élément de liaison (24) optique, placé en appui sur la butée de fin de course (26).

16. Système de connexion par enfichage selon l'une des revendications précédentes, **caractérisé en ce que** la partie d'enfichage femelle (18) comprend un boîtier à montage en ligne (76), servant à la liaison mutuelle de câbles optiques (12), boîtier sur chacune des deux extrémités duquel est susceptible être enfichée une partie d'enfichage mâle (16).

17. Système de connexion par enfichage selon la revendication 16, **caractérisé en ce que** les deux parties d'enfichage mâles (16) sont susceptibles être couplées chacune au boîtier à montage en ligne (76), à l'aide d'un mécanisme de verrouillage par rotation (14) muni d'un verrouillage à baïonnette (28).

18. Système de connexion par enfichage selon la revendication 16 ou 17, **caractérisé en ce que** les deux mécanismes de verrouillage par rotation (14) sont prévus sur les deux parties d'enfichage mâles.

19. Système de connexion par enfichage selon l'une des revendications 16 à 18, **caractérisé en ce que** l'une des deux parties d'enfichage mâles (16) est formée par l'élément d'adaptation ou de positionnement (30) concerné.
